# FASCICULE DE BREVET EUROPEEN

(11) **EP 2 137 115 B1**
(45) Date de publication et mention de la délivrance du brevet: **17.08.2011**
(21) Numéro de dépôt: 08775725.8
(22) Date de dépôt: 19.03.2008
(51) Int. Cl.: C03B 5/04, C03B 5/235

(54) **DISPOSITIF DE FUSION DU VERRE COMPRENANT DEUX FOURS**
GLASSCHMELZVORRICHTUNG MIT ZWEI ÖFEN
GLASS MELTING DEVICE INCLUDING TWO FURNACES

(30) Priorité: 20.03.2007 FR 0753936
(43) Date de publication de la demande: 30.12.2009
(73) Titulaire: Saint-Gobain Glass France, 92400 Courbevoie (FR); Saint-Gobain Isover, 92400 Courbevoie (FR)
(72) Inventeur: JEANVOINE, Pierre, 78100 Saint Germain-en-Laye (FR); MAUGENDRE, Stéphane, F-60460 Precy s/Oise (FR)
(74) Mandataire: Colombier, Christian
(86) Numéro de dépôt international: PCT/FR2008/050471
(87) Numéro de publication internationale: WO 2008/132373

(56) Documents cités:
- BE-A- 647 182
- FR-A- 2 832 704
- JP-A- 56 120 523
- TOMIK J: "NEW FURNACE UTILIZES GLASS FIBER WASTE" GLASS INDUSTRY, GLASS INDUSTRY MAGAZINE. NEW YORK, US, vol. 71, no. 4, 10 mars 1990 (1990-03-10), pages 23-24, XP000115412 ISSN: 0017-1026

## Description

L'invention concerne un dispositif de fusion de matières vitrifiables comprenant un four de fusion classique et un four à combustion immergé, les flux de verre étant mélangés en amont du four classique.

Les fours de fusion classiques sont des dispositifs dont l'énergie thermique provient majoritairement de brûleurs aériens et/ou d'électrodes. Ces fours sont de grande taille (la surface du bain de verre fondu peut aller de 6 à 600 m², et dans le cas de fours à brûleurs aériens plus généralement de 20 à 600 m²) et présentent une forte inertie. Ils fonctionnent de ce fait sans interruption plusieurs années de suite.

On a déjà proposé dans WO2004/078664 et WO03045859 d'adjoindre à l'un de ces fours classiques un four à brûleur immergé. Les flux de verre, de natures différentes, sont mélangés en aval des deux fours, notamment dans une cellule de mélange munie d'agitateurs, ou alors, le flux de verre provenant du four à brûleur immergé alimente directement le four classique dans sa partie aval. Un dispositif d'affinage spécifiquement pour le flux de verre provenant du four à brûleur immergé est alors indispensable, car sinon le flux final contient beaucoup trop de bulles et/ou d'infondus. En effet, les fours à brûleurs immergés sont connus pour produire des verres mousseux très riches en gaz et nécessitent au moins deux cuves en série pour digérer l'ensemble des matières premières.

On a maintenant eu l'idée d'introduire le flux de verre provenant du four à combustion immergé dans le four classique et en amont de celui-ci, de façon à profiter de la zone d'affinage en aval du four classique pour les deux flux de verre mélangés. En effet, un four classique comprend toujours une zone d'affinage plus ou moins importante dans sa partie avale, ce qui contribue à éliminer les bulles se formant inévitablement lors de la fabrication d'un verre, ainsi qu'à finir de « digérer » les particules encore infondues. On a maintenant eu l'idée d'utiliser cette zone avale du four classique notamment pour éliminer à la fois les gaz provenant des matières vitrifiables fondues du four classique et les gaz contenus dans le verre provenant du four à combustion immergée. Il est possible que les grosses bulles produites dans le verre du four auxiliaire aident à l'élimination des petites bulles créées dans le verre du four principal par un phénomène de coalescence. Ainsi, de façon un peu paradoxale, la production de plus de bulles conduit à une meilleure élimination des bulles. De plus, on se sert de la zone aval du four principal pour finir de fondre ou « digérer » les infondus et impuretés (notamment métaux) contenus dans le verre provenant du four auxiliaire et pour homogénéïser les deux flux de verre sur le plan de leur redox lorsque cela est nécessaire.

Dans le cadre de la présente demande, on appelle le four classique « four principal » et le four à combustion immergée « four auxiliaire ». Plus de 50% et même plus de 80% de l'énergie thermique apportée dans le four principal, l'est par le biais de brûleurs aériens ou d'électrodes ou par ces deux moyens. Plus de 50% et même plus de 80% de l'énergie thermique apportée dans le four auxiliaire, l'est par le biais d'une combustion immergée. La matière première vitrifiable introduite dans le four principal est appelée matière première vitrifiable principale et la matière première vitrifiable introduite dans le four auxiliaire est appelée matière première vitrifiable auxiliaire. La matière première vitrifiable principale conduit à un flux principal d'un verre principal et matière première vitrifiable auxiliaire conduit à un flux auxiliaire d'un verre auxiliaire. Ces deux verres sont mélangés dans la partie amont du four principal pour produire un flux final d'un verre final. Par « partie amont » du four principal, on entend le premier tiers en amont de la longueur de la surface du bain de verre, ladite longueur étant située sur l'axe horizontal et longitudinal du four. Généralement, le four principal a une longueur plus grande que sa largeur, le rapport de la longueur sur la largeur pouvant aller de 1,5 à 6. Les termes « amont » et « aval » se réfèrent à la direction d'écoulement du verre, ce dernier coulant de l'amont vers l'aval. La partie amont comprend la zone d'introduction des matières vitrifiables. La partie aval comprend la zone de sortie du verre final vers l'extérieur du four principal. De préférence, le verre auxiliaire pénètre dans le four principal par l'intermédiaire d'un déversoir ou d'une niche un peu en retrait par rapport à la paroi latérale du four principal, ladite niche pouvant comprendre un barrage de protection (paroi descendant du plafond et pénétrant un peu dans le verre fondu pour faire obstacle aux matières solides surnageantes) pour empêcher la composition de matière vitrifiable de rentrer dans la niche. Le verre auxiliaire pénètre de préférence le plus en amont possible dans le four principal, notamment de préférence dans le premier quart en amont de la longueur du four principal. On réduit ainsi le risque que des infondus provenant du verre auxiliaire ne perdurent au cours de la traversée du four principal.

Ainsi l'invention concerne en premier lieu un dispositif de préparation d'un verre final comprenant un four principal à brûleurs aériens et/ou électrodes alimenté en matières vitrifiables principales générant un verre principal fondu, et un four auxiliaire à combustion immergé, ledit four auxiliaire étant alimenté en matières vitrifiables auxiliaires, le verre auxiliaire fondu alimentant le four principal en son amont dans le premier tiers de sa longueur.

L'invention présente plus particulièrement un intérêt lorsque l'on souhaite augmenter temporairement la tirée («furnace pull» en anglais) du four principal. Ce cas se produit lorsqu'un verre doit ponctuellement être fabriqué en plus grande quantité. Ainsi, pendant la production continue de verre final, le four auxiliaire peut fonctionner moins longtemps que le four principal alors que la durée de fonctionnement du four principal est identique à la durée de la production de verre final. Ainsi, la durée de fonctionnement du four auxiliaire peut être inférieure à celle du four principal. Selon l'invention, on produit dans le four auxiliaire un verre auxiliaire de sensiblement même composition que le verre principal. La tirée en verre final est la somme de la tirée du verre principal et de la tirée du verre auxiliaire. Le fait que les deux verres soient identiques élimine le problème de l'homogénéisation du verre sur le plan de la composition chimique. La tirée de verre auxiliaire peut représenter plus de 2% et même plus de 4% de la tirée de verre final. La tirée de verre auxiliaire peut représenter jusqu'à 10% et même jusqu'à 25% et même jusqu'à 40% de la tirée de verre final.

Le four auxiliaire, grâce à sa technologie fondée sur la combustion immergée présente une flexibilité extraordinaire, une taille réduite, tout en autorisant des tirée assez fortes. Le four à combustion immergée est naturellement agité par les gaz provenant des brûleurs, de sorte que la présence d'agitateurs mécanique est rendue inutile. Le four à combustion immergée peut comprendre de 1 à 30 brûleurs immergés selon la tirée et la puissance requise. Généralement, la surface du bain de verre fondu du four auxiliaire présente une surface allant de 0,5 m² à 15 m² (somme des surfaces internes de toutes les cuves à combustion immergée, généralement au nombre de une ou deux, composant le four auxiliaire). Sa tirée va généralement de 2 à 150 tonnes par jour.

Généralement, le rapport de la surface du bain fondu du four principal sur celle du bain fondu du four auxiliaire va de 10 à 1000.

Le dispositif selon l'invention peut être suivi d'une installation de formage en verre plat ou en verre creux ou de fibrage.

Le four principal peut être suivi d'un bassin d'affinage, mais cela n'est généralement pas nécessaire, l'affinage étant suffisamment réalisé dans le four principal lui-même, même pour l'application verre plat, ce qui est remarquable. En effet, pour l'application verre plat, le niveau de bulles dans le verre final doit être inférieur à 0,5 bulles par litre. Le verre final peut donc être destiné à alimenter une installation de formage en verre plat, notamment du type flottage sur un bain métallique (étain). Dans ce cas, de façon à donner au verre la température idoine (conditionnement thermique généralement entre 1200 et 1300°C), le verre final traverse généralement une braise (« working end » en anglais) disposée entre le four principal et l'installation de formage en verre plat. Le verre pénètre généralement dans l'installation de formage en verre plat avec une température de l'ordre de 1000 à 1200°C.

Lorsque le verre final est destiné à alimenter une installation de fibrage, aucun affineur ni braise ni autre compartiment n'est généralement nécessaire entre le four principal et l'installation de fibrage (alimentation directe de l'installation de fibrage par le verre final issu du four principal).

Le four principal est de taille bien supérieure à celle du four auxiliaire, notamment du fait de l'absence d'agitation. En effet, les températures sont généralement trop élevées pour permettre d'équiper le four principal en agitateurs mécaniques, sans devoir affronter des problèmes liés à la corrosion de ces agitateurs. Ainsi, généralement, le four principal n'est pas équipé d'agitateur mécanique. Dans le four principal, dans le cas d'un chauffage par brûleurs aériens, le verre fondu présente généralement le profil de température suivant :
- 1300 à 1400°C au niveau du talus de composition de matières vitrifiables,
- 1500 à 1600°C vers la fin du premier tiers amont,
- 1400 à 1450°C en sortie du four principal.

L'absence d'agitateurs du four principal est compensée par une longueur relativement importante, ce qui favorise les courroies de convection naturelle provoquant une agitation. Le fond du bassin du four principal peut notamment être muni d'un barrage immergé pour provoquer une courroie de convection. La longueur relativement importante du four principal est par ailleurs favorable à l'affinage.

Ainsi, l'invention combine deux technologies aux atouts opposés mais complémentaires :
- un petit four auxiliaire très flexible muni d'une forte agitation naturelle du fait de la combustion immergée, produisant un verre homogène en composition mais contenant beaucoup de bulles et, le cas échéant, des infondus (particules de silice non fondues), et
- un grand four principal peu flexible exempt d'agitation mécanique, mais ayant une surface suffisante pour produire une homogénéisation correcte (notamment pour l'application verre plat), un affinage efficace et l'élimination des infondus, sur un flux important de verre.

Ces deux technologies sont combinées dans la mesure ou la taille importante du four principal permet d'absorber facilement le surplus de verre imparfait (bulles + infondus) provenant du four auxiliaire, ce surplus permettant cependant d'augmenter une production de 10% voir même 20% et jusqu'à 40%, de façon ponctuelle, limitée dans le temps (par exemple entre 1 semaine et 15 ans) ou non, ce que permet la flexibilité du four auxiliaire. On peut aussi installer le four auxiliaire de façon définitive pour augmenter la productivité d'une installation existante et ainsi continuer à tirer partie d'un four classique, certes parfois ancien, mais pouvant continuer à fonctionner de façon satisfaisante.

Le four auxiliaire peut être alimenté en énergies de nature très diverses, ce qui est un des aspects de sa grande flexibilité. Le four auxiliaire comprend généralement au moins un brûleur immergé alimenté par un comburant gazeux et un carburant (notamment fuel liquide ou gaz combustible). Le carburant peut être du gaz hydrocarboné, de l'hydrogène ou du fuel liquide ou une énergie alternative. Notamment, le four auxiliaire peut servir à la récupération de déchets organiques de natures très diverses, ces déchets servant de combustible à la combustion immergée: du fait du brassage convectif inhérent à la technologie de la combustion immergée, ces déchets sont renouvelés continuellement à proximité des brûleurs immergés jusqu'à combustion complète. Cela permet de diminuer, voire de stopper complètement, l'alimentation en gaz ou liquide combustible des brûleurs, avec un gain énergétique substantiel. La dégradation des molécules organiques peut être ainsi complète, jusqu'à la décomposition en gaz carbonique et en eau. D'éventuelles cendres de combustion se trouvent piégées dans la phase liquide/mousseuse. Ces déchets organiques peuvent donc fournir une partie, ou la majorité ou l'essentiel voire tout le combustible nécessaire à la combustion immergée. On peut donc utiliser directement dans le réacteur le pouvoir combustible des déchets, quelque soit le niveau de celui-ci. L'utilisation de déchets organiques, permet d'obtenir un procédé particulièrement économique.

Les déchets organiques peuvent être de nature biologique (biomasse) ou être issus de l'industrie agro-alimentaire. Il peut s'agit de farines animales qui ne sont plus consommables dans au moins une partie des pays européens, et qu'il faut donc détruire. Il peut s'agir de déchets de bois, de papier de l'industrie de la papeterie. Ils peuvent aussi être constitués de polymères organiques, par exemple du polyéthylène, des résidus de pneumatiques.

Les déchets organiques peuvent être accompagnés de déchets de nature minérale qui font alors partie des matières vitrifiables. Il peut notamment s'agir de composites verre/plastique ou de sable pollué par des hydrocarbures (en conséquence d'une marée noire par exemple). On peut citer les vitrages feuilletés par exemple, associant au moins un verre avec au moins une feuille en polymère thermoplastique ou non, du type polyvinylbutyral (PVB), copolymère éthylène-vinyl acétate (EVA) , polyuréthane (PU) ou polyéthylène-téréphtalate (PET). On peut aussi citer les matériaux composites à base de polymère renforcé par du fil de verre (ou du fil de carbone ou autre type de fil de renfort), utilisés dans l'industrie automobile, ou dans les bateaux par exemple. On peut mentionner aussi les composites verre/métal comme les vitrages munis d'éléments de connectique, de revêtements métalliques. On peut dans ce dernier car très avantageusement oxyder les métaux divers (notamment l'argent) accompagnat ces vitrages dans le four auxiliaire en jouant sur le caractère plus ou moins oxydant de la flamme du brûleur immergé. Les déchets organiques peuvent être à l'origine de jusqu'à 100% (par exemple 5 à 50% ou 5 à 20%) de l'énergie totale de combustion immergée générée dans le four auxiliaire. Pour le cas ou 100% de l'énergie totale de combustion immergée est générée dans le four auxiliaire, cela signifie que l'on n'envoie que du comburant à travers le brûleur immergé, le carburant du type déchet organique étant envoyé à l'extérieur du brûleur mais à sa proximité. En pratique, et pour le démarrage on fait fonctionner le brûleur immergé de façon habituelle en l'alimentant à la fois en comburant et en fluide combustible (fuel liquide ou gaz combustible), puis on introduit progressivement les matières organiques combustible à l'extérieur du brûleur et l'on réduit simultanément l'alimentation du brûleur en fluide combustible, et ce, le cas échéant jusqu'à stopper toute alimentation du brûleur en fluide combustible. Le four auxiliaire peut donc être alimenté en combustible du type matières biologiques ou déchets organiques, le combustible du type matières biologiques ou déchets organiques pouvant notamment participer pour 5 à 100% de l'énergie totale de combustion immergée générée dans le four auxiliaire (ce qui signifie que le combustible classique du type fuel liquide ou gaz combustible participe alors pour 95 à 0% de l'énergie totale de combustion immergée générée dans le four auxiliaire).

Ainsi, le four auxiliaire permet aussi de faire varier facilement, de façon conjoncturelle, le type de source d'énergie en fonction de son prix. Une telle flexibilité est possible avec le four auxiliaire mais ne l'est pas avec le four principal. Rappelons qu'un four industriel comme le four principal est en fonctionnement continu pendant de très longues périodes, supérieure à un an et pouvant même dépasser 10 ans et même 15 ans, voire 20 ans. Pendant cette période de fonctionnement, il n'y a pas moyen de changer facilement la nature de la source d'énergie du four principal. Au contraire, le four auxiliaire permet, lui, de profiter de prix conjoncturellement avantageux sur certaines matières combustibles. On peut donc, grâce au four auxiliaire modifier plusieurs fois au moins une partie de la nature du combustible au cours d'une fabrication ininterrompu d'un certain verre avec une forte production, supérieure à 500 tonnes par jour et jusqu'à 1200 tonnes par jour (verre final).

Le comburant du brûleur immergé peut être de l'oxygène pur ou de l'air ou de l'air enrichi en oxygène.

Le verre auxiliaire et le verre principal sont de composition identique. Ceci signifie que les oxydes contenus dans le verre principal à plus de 1% en poids (comme la silice, le Na₂O le CaO, etc) ne varient pas plus en composition que de 1 % en poids entre le verre auxiliaire et le verre principal (autrement dit, tout oxyde présent dans le verre principal à plus de 1% en poids, est présent dans le verre principal et dans le verre auxiliaire à des teneurs telles que la différence de son pourcentage en poids dans ces deux verres n'est pas supérieure à 1% de sa teneur dans le verre principal).

Le verre auxiliaire et le verre principal sont identiques, mais les matières premières alimentant d'une part le four auxiliaire et d'autre part le four principal peuvent être différentes. En fait, les matières premières vitrifiables (sable source de silice, oxyde d'alcalin, oxyde de calcium, etc) alimentant les deux fours sont généralement identiques et proviennent des mêmes lots. Cependant, les matières combustibles alimentant les deux fours peuvent être différentes. Notamment, des matières organiques alternatives (matières biologiques ou déchets organiques) peuvent alimenter le four auxiliaire (et ne pas alimenter le four principal) et être à l'origine de cendres ou résidus inorganiques assimilés dans le verre. Ces résidus sont cependant de nature et en proportion telle qu'il n'est pas dérogé au principe de l'identité de composition des deux verres (auxiliaire et principal) au sens déjà donné.

Les deux fours sont généralement alimentés en matières vitrifiables classiques se présentant sous forme de poudre, et le cas échéant, partiellement en calcin. La quantité de calcin peut par exemple représenter 5 à 25 % de la masse des matières premières les alimentant. Dans le cas de la disponibilité d'un calcin pollué par des métaux (notamment l'argent) et des matières organiques, on enfourne de préférence celui-ci dans le four auxiliaire (car le four auxiliaire permet plus facilement d'oxider les métaux et le carbone), alors que l'on enfourne de préférence le calcin non pollué dans le four principal.

Pour le cas de l'utilisation de combustible particulièrement riche en carbone dans le four auxiliaire, il est possible que le fer soit plus réduit dans le verre auxiliaire que dans le verre principal. L'état d'oxydation du fer est usuellement caractérisé par l'homme du métier par ce qu'il appelle le redox. Le « redox » est le rapport de la quantité d'ions Fe²⁺ sur la quantité totale d'ions du fer).

Dans certains cas, une trop forte différence de redox entre les deux verres est néfaste car elle est source de gaz lorsque les deux verres se rencontrent. Cela pose notamment un problème lorsque le verre doit véritablement bien être débarassé de ses bulles comme dans l'application verre plat. On cherche dans ce cas à ce que la différence de redox des deux verres (auxiliaire et principal) ne dépasse pas 20% du redox le plus faible. Si en sortie du four auxiliaire le redox est trop éloigné de celui du verre principal, on préfère faire passer le verre auxiliaire dans une seconde cuve comprenant au moins un brûleur immergé pour réajuster son redox, avant de l'envoyer dans le four principal. Le réglage du redox est réalisé dans cette cuve en jouant sur le caractère plus ou moins oxydant de la flamme du brûleur immergé.

Lorsque le verre est destiné à l'application fibrage, une forte différence de rédox est généralement tolérée.

Il n'est pas exclu de placer un affineur entre le four auxiliaire et le four principal, sur le chemin du verre auxiliaire. Dans ce cas, le verre auxiliaire est au moins partiellement affiné avant de pénétrer dans le four principal, et l'affinage est poursuivi en aval du four principal. Le four auxiliaire peut donc comprendre une ou deux cuves à combustion immergée (la seconde pouvant notamment servir à régler le redox), placées l'une après l'autre sur le chemin du verre auxiliaire, et être suivi d'un affineur. Cependant, il n'est généralement pas nécessaire de recourir à un tel affineur pour le verre auxiliaire car l'affinage procuré par le four principal suffit généralement à l'affinage des deux verres mélangés.

Si le four principal est équipé de brûleurs aériens, il est généralement aussi équipé de régénérateurs. Ces régénérateurs contiennent des empilements d'éléments réfractaires destinés alternativement à être chauffés par les fumées, puis à restituer la chaleur récupérée des fumées au comburant, généralement de l'air. Généralement, les brûleurs aériens sont situés en rangées dans les deux parois latérales. Les parois latérales sont également munies chacune d'orifices pour l'évacuation des fumées, menant aux régénérateurs. On fait fonctionner alternativement chaque rangée de brûleurs d'une paroi dont on récupère les fumées au travers des orifices de la paroi en face d'eux, la chaleur desdites fumées étant récupérées par les régénérateurs correspondants. Après un certain temps de fonctionnement, on inverse le fonctionnement entre les deux parois latérales, le comburant étant maintenant chauffé par les régénérateurs qui étaient eux-mêmes parcourus par les fumées dans l'étape précédente.

Le four principal peut également être du type « unit-melter », c'est-à-dire équipé de brûleurs aériens transversaux, la chaleur des fumées étant alors récupérées dans un récupérateur, généralement placé derrière la paroi amont.

Pour le cas ou le four principal est équipé de brûleurs aériens, on conduit avantageusement les fumées issues du four auxiliaire dans l'atmosphère du four principal. Les fumées des deux fours sont donc mélangées dans l'atmosphère du four principal. De la sorte, la chaleur des fumées du four auxiliaire est récupérée dans les régénérateurs ou le récupérateur du four principal, au même titre que les fumées du four principal.

On peut également utiliser les fumées pour réchauffer les matières premières (poudre et/ou calcin) alimentant l'un ou les deux fours.

Enfin, les calories des fumées du four auxiliaire peut également servir à la production d'oxygène, par exemple selon la technologie dite OTM (de l'anglais « oxygen transport membrane »), ledit oxygène servant de comburant pour le four auxiliaire et/ou le four principal.

L'invention concerne également un procédé de fabrication de verre plat comprenant le procédé de fabrication de verre final ci-dessus exposé, ledit verre final étant ensuite transformé en verre plat, généralement dans une installation de flottage sur un bain de métal fondu. La largeur du bain de métal fondu peut être supérieure à 2 mètres.

L'invention concerne également un procédé de fabrication de fibres de verre comprenant le procédé de fabrication de verre final ci-dessus exposé, ledit verre final étant ensuite transformé en fibres de verre dans une unité de fibrage. Notamment, le verre final peut ne passer dans aucun compartiment entre le four principal et l'unité de fibrage.

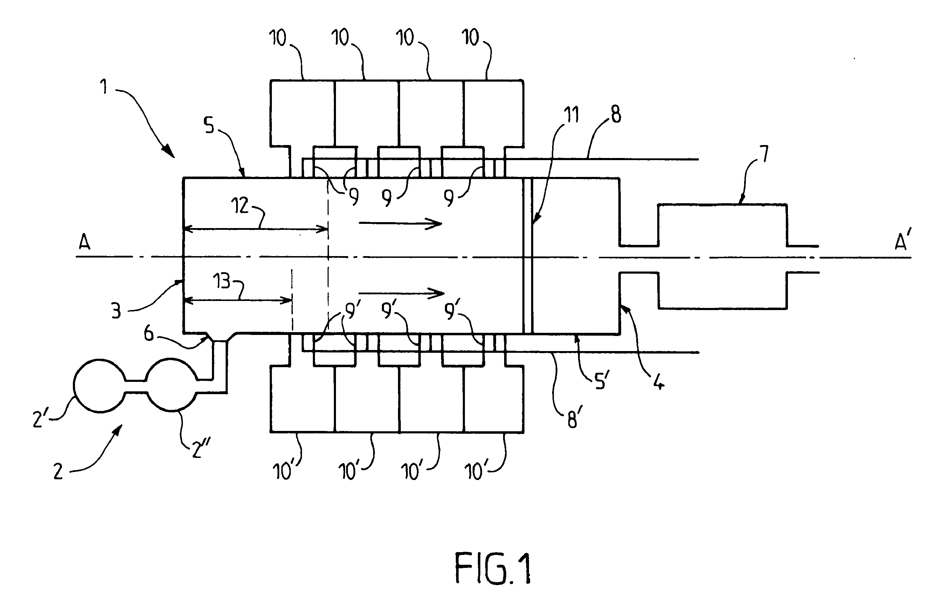

La figure 1 représente un exemple de dispositif selon l'invention comprenant un four principal 1 et un four auxiliaire 2 comprenant au moins un brûleur immergé. Le four principal comprend une paroi amont 3, une paroi aval 4 et deux parois latérales 5 et 5'. Les matières vitrifiables sont introduites dès la paroi amont 3 par un dispositif habituel non représenté. Le four principal est symétrique par rapport à l'axe AA' qui est horizontal et parallèle à la direction longitudinale du four. Les matières vitrifiables fondues coulent de l'amont vers l'aval comme représenté par les flèches. Le four auxiliaire 2 comprend ici deux cuves 2' et 2" en séries, la première 2' étant alimentée par les matières vitrifiables et la seconde 2" servant à régler le redox. Le four auxiliaire 2 délivre le verre auxiliaire en amont du four principal au travers de la niche 6. Cette niche 6 est située en amont dans le premier tiers 12 et même le premier quart 13 de la longueur du bain de verre dans le four principal. Le verre final passe dans une braise 7 à des fins de conditionnement thermique avant d'aller dans l'unité de transformation non représentée et pouvant être une installation de verre flotté pour la production de verre plat. Le four principal est équipé au travers de ses deux parois latérales de deux rangées de quatre brûleurs aériens fonctionnant l'une après l'autre. Chaque brûleur aérien comprend un injecteur de gaz combustible alimenté en gaz par les canalisations 8 et 8', et une arrivée d'air chaud 9 et 9'. Les ouvertures 9 et 9' jouent alternativement le rôle d'arrivée d'air chaud et celui de collecteur de fumées. Pour chaque couple injecteur/arrivée d'air, l'injecteur est situé en dessous de l'arrivée d'air. Les ouvertures 9 et 9' sont reliées chacune à un régénérateur 10, 10'. Lorsque les injecteurs de la paroi 5 fonctionnent, ceux de la paroi 5' ne fonctionnent pas. Par contre, les fumées passent à travers les ouvertures 9' de la paroi latérale 5' en face d'eux et la chaleur des fumées est récupérée dans les régénérateurs 10. Au bout de quelques dizaines de minutes, on inverse le fonctionnement du four principal, c'est-à-dire que l'on arrête le fonctionnement des brûleurs de la paroi 5 (arrêt de gaz combustible à travers la canalisation 8 et arrêt d'air à travers les ouvertures 9) et l'on met en route les brûleurs aériens de la paroi 5' en face en alimentant ses injecteurs en gaz par la canalisation 5' et en alimentant en air chaud les arrivées d'air 9'. L'air est chaud grâce au réchauffement par les régénérateurs 10. Au bout de quelques dizaines de minutes, on inverse encore le fonctionnement du four et ainsi de suite. Le four principal est muni d'un barrage immergé 11 favorisant la formation de courroies de convection dans le verre fondu.

## Revendications

1. Dispositif de préparation d'un verre final comprenant un four principal (1) à brûleurs aériens et/ou électrodes alimenté en matières vitrifiables principales générant un verre principal fondu, et un four auxiliaire (2) à combustion immergée générant un verre auxiliaire fondu, ledit four auxiliaire (2) étant alimenté en matières vitrifiables auxiliaires, ledit dispositif étant **caractérisé en ce que** le verre auxiliaire fondu alimente le four principal (1) en son amont dans le premier tiers (12) de sa longueur.

2. Dispositif selon la revendication précédente, **caractérisé en ce que** la surface du bain fondu du four principal (1) va de 6 à 600 m².

3. Dispositif selon l'une des revendications précédentes, **caractérisé en ce que** la surface du bain fondu du four auxiliaire (2) va de 0,5 à 15 m².

4. Dispositif selon l'une des revendications précédentes, **caractérisé en ce que** le rapport de la surface du bain fondu du four principal (1) sur celle du bain fondu du four auxiliaire (2) va de 10 à 1000.

5. Dispositif selon l'une des revendications précédentes, **caractérisé en ce que** le four principal (1) n'est pas équipé d'agitateur mécanique.

6. Procédé de fabrication d'un verre final par le dispositif de l'une des revendications précédentes, la verre auxiliaire étant de sensiblement même composition que la verre principal.

7. Procédé selon l'une des revendications précédentes de procédé, **caractérisé en ce que** la durée de fonctionnement du four auxiliaire (2) est inférieure à celle du four principal (1)

8. Procédé selon l'une des revendications précédentes de procédé, **caractérisé en ce que** la tirée de verre auxiliaire représente 2% à 40% de la tirée de verre final.

9. Procédé selon la revendication précédente, **caractérisé en ce que** la tirée de verre auxiliaire représente 4% à 25% de la tirée de verre final.

10. Procédé selon l'une des revendications précédentes de procédé, **caractérisé en ce que** le four auxillaire (2) est alimenté en combustible du type matières biologiques ou déchets organiques.

11. Procédé selon la revendication précédente, **caractérisé en ce que** le combustible du type matières biologiques ou déchets organiques participe pour 5 à 100% de l'énergie totale de combustion immergée générée dans le four auxiliaire.

12. Procédé l'une des revendications précédentes de procédé, **caractérisé en ce que** tout oxyde présent dans le verre principal à plus de 1% en poids, est présent dans le verre principal et dans le verre auxiliaire à des teneurs telles que la différence de son pourcentage en poids dans deux verres n'est pas supérieure à 1% de sa teneur dans le verre principal.

13. Procédé l'une des revendications précédentes de procédé, **caractérisé en que** les fumées du four auxiliaire (2) sont conduites dans l'atmosphère du four principal (1).

14. Procédé de fabrication de verre plat comprenant le procédé de fabrication de verre final de l'une des revendications de procédé précédente, ledit verre final étant ensuite transformé en verre plat.

15. Procédé selon la revendication précédente, **caractérisé en ce que** la différence de redox des verres auxiliaire et principal ne dépasse pas 20% du redox le plus faible.

16. Procédé selon l'une des deux revendications précédentes, **caractérisé en ce que** le verre est transformé en verre plat dans une installation de flottage sur un bain de métal fondu dont la largeur est supérieure à 2 mètres.

17. Procédé de fabrication de fibres de verre comprenant le procédé de fabrication de verre final de l'une des revendications 6 à 13, ledit verre final étant ensuite transformé en fibres de verre dans une unité de fibrage.

18. Procédé selon la revendication précédente, **caractérisé en ce que** le verre final ne passe dans aucun compartiment entre le four principal (1) et l'unité de fibrage.

## Claims

1. An installation for preparing a final glass, comprising a main furnace (1) with electrodes and/or overhead burners, which is fed with main batch materials generating a main molten glass, and a submerged-combustion auxiliary furnace (2), said auxiliary furnace(2)being fed with auxiliary batch materials, **characterized in that** the auxiliary molten glass feed the main furnace (1) toward its upstream end in the first third (12) of its length.

2. The installation as claimed in the preceding claim, **characterized in that** the surface area of the molten bath of the main furnace (1) ranges from 6 to 600 m².

3. The installation as claimed in one of the preceding claims, **characterized in that** the surface area of the molten bath of the auxiliary furnace(2)ranges from 0.5 to 15 m².

4. The installation as claimed in one of the preceding claims, **characterized in that** the ratio of the surface area of the molten bath of the main furnace(1)to that of the molten bath of the auxiliary furnace(2)ranges from 10 to 1000.

5. The installation as claimed in one of the preceding claims, **characterized in that** the main furnace(1)is not equipped with a mechanical stirrer.

6. A process for manufacturing a final glass via the installation from one of the preceding claims, the auxiliary glass being of substantially the same composition as the main glass.

7. The process as claimed in one of the preceding process claims, **characterized in that** the operating time of the auxiliary furnace(2)is less than that of the main furnace(1).

8. The process as claimed in one of the preceding process claims, **characterized in that** the furnace pull of auxiliary glass represents 2% to 40% of the final glass output.

9. The process as claimed in the preceding claim, **characterized in that** the furnace pull of auxiliary glass represents 4% to 25% of the final glass output.

10. The process as claimed in one of the preceding process claims, **characterized in that** the auxiliary furnace (2) is fed with fuel of the biological matter or organic waste type.

11. The process as claimed in the preceding claim, **characterized in that** the fuel of the biological matter or organic waste type accounts for 5 to 100% of the total submerged-combustion energy generated in the auxiliary furnace.

12. The process as claimed in one of the preceding process claims, **characterized in that** any oxide present in the main glass at more than 1 wt%, is present in the main glass and in the auxiliary glass at contents such that the difference in its weight percentage in these two glasses is not greater than 1% of its content in the main glass.

13. The process as claimed in one of the preceding process claims, **characterized in that** the flue gases from the auxiliary furnace(2)are conveyed into the atmosphere of the main furnace(1).

14. A process for manufacturing flat glass that comprises the process for manufacturing final glass from one of the preceding process claims, said final glass then being converted to flat glass.

15. The process as claimed in the preceding claim, **characterized in that** the difference in redox of the auxiliary and main glasses does not exceed 20% of the lowest redox.

16. The process as claimed in one of the two preceding claims, **characterized in that** the glass is converted to flat glass in a plant in which it floats on a bath of molten metal, the width of which is greater than 2 meters.

17. A process for manufacturing glass fibers that comprises the process for manufacturing final glass from one of claims 6 to 13, said final glass then being converted to glass fibers in a fiberizing unit.

18. The process as claimed in the preceding claim, **characterized in that** the final glass does not pass into any compartment between the main furnace(1)and the fiberizing unit.

## Patentansprüche

1. Vorrichtung zur Zubereitung eines Endglases, umfassend einen mit verglasbaren Hauptmaterialien beaufschlagten Hauptofen (1) mit Überkopfbrennern und/oder Elektroden, der ein geschmolzenes Hauptglas erzeugt, und einen Nebenofen (2) mit Tauchverbrennung, der ein geschmolzenes Nebenglas erzeugt, wobei der Nebenofen (2) mit verglasbaren Nebenmaterialien beaufschlagt wird, wobei die Vorrichtung **dadurch gekennzeichnet ist, dass** das geschmolzene Nebenglas dem Hauptofen (1) in seinem vorderen Teil im ersten Drittel (12) seiner Länge zugeführt wird.

2. Vorrichtung nach dem vorstehenden Anspruch, **dadurch gekennzeichnet, dass** die Oberfläche des Schmelzbades des Hauptofens (1) 6 bis 600 m² beträgt.

3. Vorrichtung nach einem der vorstehenden Ansprüche, **dadurch gekennzeichnet, dass** die Oberfläche des Schmelzbades des Nebenofens (2) 0,5 bis 15 m² beträgt.

4. Vorrichtung nach einem der vorstehenden Ansprüche, **dadurch gekennzeichnet, dass** das Verhältnis von der Oberfläche des Schmelzbades des Hauptofens (1) zu derjenigen des Schmelzbades des Nebenofens (2) zwischen 10 und 1000 liegt.

5. Vorrichtung nach einem der vorstehenden Ansprüche, **dadurch gekennzeichnet, dass** der Hauptofen (1) nicht mit mechanischem Rührwerk ausgestattet ist.

6. Verfahren zur Herstellung eines Endglases mittels der Vorrichtung von einem der vorstehenden Ansprüche, wobei das Nebenglas im Wesentlichen die gleiche Zusammensetzung wie das Hauptglas aufweist.

7. Verfahren nach einem der vorstehenden Verfahrensansprüche, **dadurch gekennzeichnet, dass** die Betriebsdauer des Nebenofens (2) geringer als die des Hauptofens (1) ist.

8. Verfahren nach einem der vorstehenden Verfahrensansprüche, **dadurch gekennzeichnet, dass** der Nebenglasdurchsatz 2 % bis 40 % des Endglasdurchsatzes ausmacht.

9. Verfahren nach dem vorstehenden Anspruch, **dadurch gekennzeichnet, dass** der Nebenglasdurchsatz 4 % bis 25 % des Endglasdurchsatzes ausmacht.

10. Verfahren nach einem der vorstehenden Verfahrensansprüche, **dadurch gekennzeichnet, dass** der Nebenofen (2) mit Brennstoff vom Typ biologische Materialien oder organische Abfälle gespeist wird.

11. Verfahren nach dem vorstehenden Anspruch, **dadurch gekennzeichnet, dass** der Brennstoff vom Typ biologische Materialien oder organische Abfälle mit 5 bis 100 % an der in dem Nebenofen erzeugten gesamten Tauchverbrennungsenergie beteiligt ist.

12. Verfahren nach einem der vorstehenden Verfahrensansprüche, **dadurch gekennzeichnet, dass** jedes Oxid, das in dem Hauptglas zu mehr als 1 Gew.-% vorhanden ist, in dem Hauptglas und in dem Nebenglas in Gehalten vorliegt, die derart sind, dass der Unterschied seines Gewichtprozentsatzes in diesem beiden Gläsern nicht mehr als 1 % seines Gehaltes im Hauptglas beträgt.

13. Verfahren nach einem der vorstehenden Verfahrensansprüche, **dadurch gekennzeichnet, dass** die Abgase des Nebenofens (2) in die Atmosphäre des Hauptofens (1) geleitet werden.

14. Verfahren zur Herstellung von Flachglas, umfassend das Verfahren zur Herstellung von Endglas von einem der vorstehenden Verfahrensansprüche, wobei das Endglas anschließend zu Flachglas verarbeitet wird.

15. Verfahren nach dem vorstehenden Anspruch, **dadurch gekennzeichnet, dass** die Redoxdifferenz des Nebenglases und des Hauptglases 20 % des geringsten Redox nicht überschreitet.

16. Verfahren nach einem der beiden vorstehenden Ansprüche, **dadurch gekennzeichnet, dass** das Glas in einer Schwimmanlage über einem geschmolzenem Metallbad, dessen Breite mehr als 2 Meter beträgt, zu Flachglas verarbeitet wird.

17. Verfahren zur Herstellung von Glasfasern, umfassend das Verfahren zur Herstellung von Endglas von einem der Ansprüche 6 bis 13, wobei das Endglas anschließend in einer Faserzieheinheit zu Glasfasern verarbeitet wird.

18. Verfahren nach dem vorstehenden Anspruch, **dadurch gekennzeichnet, dass** das Endglas keinen Raum zwischen dem Hauptofen (1) und der Faserzieheinheit durchläuft.
